# EUROPEAN PATENT APPLICATION

(11) **EP 2 392 808 A1**
(43) Date of publication of application: **07.12.2011**
(21) Application number: 09839207.9
(22) Date of filing: 02.02.2009
(51) Int. Cl.: F02D 41/38

(54) **CONTROL DEVICE FOR INTERNAL COMBUSTION ENGINE**

(71) Applicant: Toyota Jidosha Kabushiki Kaisha, Toyota-shi, Aichi 471-8571 (JP)
(72) Inventor: NADA, Mitsuhiro, Toyota-shi Aichi 471-8571 (JP)
(74) Representative: TBK
(86) International application number: PCT/JP2009/051710
(87) International publication number: WO 2010/087017

(57) **Abstract**

In a situation where the compression end temperature becomes lower than the air-fuel mixture self-ignition temperature as the EGR rate is increased, the injection timing of pre-injection executed prior to main injection is shifted toward the angle of advance side. The amount of shift toward the angle of advance side is set such that the greater the EGR rate, the greater the amount of shift. Thereby, insufficiency of the amount of heat for preheating the inside of a cylinder at the main injection start timing is prevented, and successive combustion can be attained in which fuel injected in main injection immediately starts burning after fuel injection.

## Description

### [Technical Field]

The present invention relates to a control apparatus of a compression self-ignition internal combustion engine represented by a diesel engine. Specifically, the present invention relates to a technique for improving the state of combustion in an internal combustion engine provided with an exhaust recirculating apparatus that recirculates part of exhaust gas in an intake system.

### [Background Art]

As is commonly known in the conventional technology, in a diesel engine (below, also referred to simply as an engine) used as an automobile engine or the like, complicated control is performed in order for engine characteristics such as exhaust gas characteristics, fuel consumption characteristics, combustion stability, power characteristics, and so forth to satisfy various demands.

Specifically, adapted values of various control parameters such as an optimal amount of fuel injected according to the operating state of the engine determined based on the rotation number or load of the engine are set in advance as a control map, and this control map is stored in an electronic control unit for engine control (engine ECU). The engine ECU performs engine control by referring to the adapted values in the control map.

In this type of engine, in order to achieve an improvement in exhaust emissions, an exhaust gas recirculation (EGR) apparatus that recirculates part of an exhaust gas in an intake path is provided (for example, see below PTLs 1 and 2). This EGR apparatus is provided with an EGR path by which an engine exhaust path and intake path are in communication with each other, and an EGR valve provided in the EGR path. By adjusting the opening degree of the EGR valve, the amount (EGR amount) of exhaust gas that is directed from the exhaust path back to the intake path via the EGR path is adjusted to set an EGR rate in the intake gas to a target EGR rate that has been set in advance. When part of the exhaust gas is returned to the intake path by the EGR apparatus in this way, the combustion temperature of the air-fuel mixture is reduced so that generation of nitrogen oxide (NOx) in a combustion chamber is suppressed, and as a result exhaust emissions are improved.
[PTL 1] JP 2006-183485A
[PTL 2] JP 2004-3439A

### [Summary of Invention]

### [Technical Problem]

Incidentally, known forms of injecting fuel in a diesel engine include main injection that is an injection operation for torque generation and pre-injection that is carried out prior to the main injection as disclosed in the aforementioned patent literatures.

The present inventors focused on the fact that it is possible to achieve a combustion mechanism that allows easy control of combustion if combustion is started with almost no ignition delay (minimized ignition delay) once fuel injected during the aforementioned main injection undergoes thermal decomposition by being immediately exposed to a cylinder temperature environment that has a temperature no less than the self-ignition temperature. The combustion mechanism in which fuel injected during main injection immediately starts burning in this way, or the combustion mechanism in which diffusive combustion in a cylinder starts substantially simultaneously with the beginning of main injection, is hereinafter referred to as successive combustion.

To describe more specifically, fuel ignition delay in a diesel engine includes physical delay and chemical delay. Physical delay refers to the time it takes fuel droplets to evaporate/mix and depends on the gas temperature in the combustion field. On the other hand, chemical delay refers to the time it takes fuel vapor to chemically bond/decompose and to oxidatively generate heat. To achieve the aforementioned successive combustion, it is effective to minimize such physical delay and thus to minimize ignition delay. Once ignition delay is minimized in such a way, combustion noise can be reduced and the quietness of an engine can be enhanced. Moreover, the rate of combustion when combustion starts near the top dead center (TDC) of a piston can also be reduced, enabling the amount of NOx generated to be reduced.

Once the successive combustion is attained, the combustion of fuel injected in main injection is barely carried out in the form of premixed combustion. As a result, the control of the fuel injection timing in main injection substantially serves as the control of a combustion timing, and it is thus possible to significantly improve combustion controllability. That is, heretofore, combustion in a diesel engine has largely been executed in the form of premixed combustion. In particular, in a homogeneous charge compression ignition (HCCI) engine as disclosed in PTL2 above, main combustion is predominantly premix combustion. Also in the HCCI engine disclosed in PTL2, fuel when sub injection is executed does not immediately start burning, taking away heat of the air-fuel mixture as latent heat of vaporization. That is, the aforementioned sub injection decreases the temperature within a cylinder and thus cannot be used as a technique to achieve successive combustion as described above.

The present inventors, focusing on achieving the above-described novel combustion mechanism, i.e., successive combustion (combustion that starts immediately after the injection of fuel in main injection (while minimizing physical delay)), researched the control of the operation of internal combustion engines, such as the control of fuel injection. Then, the inventors researched the relationship between the EGR rate in intake air specified by an exhaust recirculating apparatus and the feasibility of the aforementioned successive combustion, and arrived at the present invention.

Conventional techniques that execute pre-injection or pilot injection (hereinafter description is collectively given using pre-injection) prior to main injection as a method of preventing the ignition delay of fuel injected in main injection do not heretofore particularly technically specify setting an injection start timing (the timing at which injection is started in pre-injection) or an injection amount (the amount of fuel injected in pre-injection). For this reason, technology for always performing pre-injection at optimal injection timings and injection amounts and bringing about maximum pre-injection effects had not been developed.

In other words, heretofore, fuel injection timing and like factors had been individually set from the viewpoint of reducing combustion noise, reducing the amount of NOx generated, and ensuring high engine torque, and in practice, settings have been adapted for each type of engine through trial and error (constructing a suitable fuel injection pattern for pre-injection and like injection for each type of engine). Moreover, the control of pre-injection based on the EGR rate also has been merely adapted through trial and error.

As described above, since fuel injection patterns have conventionally been determined through trial and error, a systematic fuel injection control technique common to various types of engines has not been developed, and therefore there is still some room for improvement in order to achieve optimization of the control of internal combustion engine operations such as fuel injection control based on the EGR rate.

The present invention has been achieved in view of the above, and an object thereof is to provide, for an internal combustion engine that uses compression self-ignition in which the combustion of fuel injected in main injection is primarily diffusive combustion, a control apparatus of an internal combustion engine that allows the above-described successive combustion in which fuel injected in main injection burns immediately after injection to be attained.

### [Solution to Problem]

### - Principles of Solution -

A principle of the solution provided by the present invention for achieving the above aim attains the above-described successive combustion by performing a cylinder preheating operation based on the compositional change of an air-fuel mixture present in a cylinder as the EGR rate is increased so that the air-fuel mixture temperature when main injection is performed is no less than the self-ignition temperature of the air-fuel mixture.

### - Solving Means -

Specifically, the present invention is premised on a control apparatus of a compression self-igniting internal combustion engine in which an exhaust recirculating apparatus that recirculates part of exhaust gas discharged by an exhaust system in an intake system is provided, at least main injection and sub injection performed prior to the main injection can be performed as a fuel injection operation from a fuel injection valve, and the combustion of fuel injected in the main injection is primarily diffusive combustion. This control apparatus of an internal combustion engine is provided with cylinder temperature controlling means that executes, when the recirculation rate of exhaust gas in the intake system exceeds a predetermined value at which the actual air-fuel mixture temperature is lower than the air-fuel mixture self-ignition temperature, cylinder temperature increase control for increasing the air-fuel mixture temperature so as to fill a shortage of the actual air-fuel mixture temperature relative to the air-fuel mixture self-ignition temperature based on the recirculation rate.

Here, the phrase "the combustion of fuel injected in main injection is primarily diffusive combustion" is to specify that since the present invention is for achieving successive combustion (a combustion mechanism in which diffusive combustion starts in a cylinder substantially simultaneously with the beginning of main injection) as described above, the present invention is not applicable to HCCI engines, PCCI engines, and like engines in which combustion is primarily premixed combustion.

With the specific feature presented above, the efficiency of charging into a cylinder becomes lower as the recirculation rate of exhaust gas in the intake system is increased, and accordingly the air-fuel mixture self-ignition temperature (a cylinder temperature at which an air-fuel mixture ignites spontaneously: for example, the temperature at the compression end of a piston) is increased. Then, once the recirculation rate exceeds a predetermined value and a situation where the actual air-fuel mixture temperature is lower than the air-fuel mixture self-ignition temperature is created when main injection is performed, cylinder temperature increase control for increasing the air-fuel mixture temperature is executed so as to fill a shortage of the actual air-fuel mixture temperature relative to the air-fuel mixture self-ignition temperature. Therefore, even in a relatively high recirculation rate situation (for example, a recirculation rate of 50%), insufficiency of the amount of preheat at the main injection start timing, for example, is prevented, and the aforementioned successive combustion can be achieved in which combustion immediately starts after fuel injection with almost no ignition delay once fuel injected in main injection undergoes thermal decomposition by being immediately exposed to a cylinder temperature environment that has a temperature no less than the self-ignition temperature.

Specific examples of cylinder temperature increase control executed by the cylinder temperature controlling means are as follows.

First, the cylinder temperature controlling means is to execute cylinder temperature increase control so as to correct the injection timing of the sub injection to be shifted toward the angle of advance side such that the greater the shortage of the actual air-fuel mixture temperature relative to the air-fuel mixture self-ignition temperature, the farther the injection timing of the sub injection is shifted toward the angle of advance side.

Also, the cylinder temperature controlling means executes cylinder temperature increase control so as to correct the injection amount of the sub injection to be increased such that the greater the shortage of the actual air-fuel mixture temperature relative to the air-fuel mixture self-ignition temperature, the greater the injection amount of the sub injection is increased.

Also, the cylinder temperature controlling means executes cylinder temperature increase control so as to correct the injection amount of the sub injection to be increased and the injection timing of the sub injection to be shifted toward the angle of advance side such that the greater the shortage of the actual air-fuel mixture temperature relative to the air-fuel mixture self-ignition temperature, the greater the injection amount of the sub injection is increased and the farther the injection timing of the sub injection is shifted toward the angle of advance side.

Also, the cylinder temperature controlling means executes cylinder temperature increase control so as to apply electricity to a glow plug disposed in a cylinder such that electricity is applied to the glow plug if there is a shortage of the actual air-fuel mixture temperature relative to the air-fuel mixture self-ignition temperature.

Moreover, the cylinder temperature controlling means controls the extent of cooling of exhaust gas performed by an EGR cooler disposed in the exhaust recirculating apparatus such that the greater the shortage of the actual air-fuel mixture temperature relative to the air-fuel mixture self-ignition temperature, the smaller the extent of cooling of exhaust gas performed by the EGR cooler is set.

In a specific configuration in this case, a bypass path that bypasses the EGR cooler is provided and the bypass path is equipped with a regulating valve whose opening degree is adjustable. This configuration allows the extent of cooling of exhaust gas by the EGR cooler to be changed by the adjustment of the opening degree of the regulating valve so as to adjust the amount of exhaust gas that flows through the EGR cooler.

These specific features enable the temperature of an air-fuel mixture created by fuel injected in main injection to be readily increased so as to be higher than the air-fuel mixture self-ignition temperature, and the aforementioned successive combustion to be achieved with a highly robust control technique.

In addition, the cylinder temperature increase control is not executed when the recirculation rate of exhaust gas in the intake system is at or lower than the predetermined value. In other words, a situation where the charging efficiency in a cylinder is sufficiently high and the actual air-fuel mixture temperature is higher than the air-fuel mixture self-ignition temperature, for example, allows the successive combustion in which fuel injected in main injection starts burning immediately after fuel injection with almost no ignition delay. Accordingly, the cylinder temperature increase control is not executed in this case to prevent the temperature from being excessively increased in a cylinder.

Moreover, in addition to the configurations described above, the cylinder temperature increase control may be executed according to the intake air charging efficiency brought about by a turbocharger. In other words, a variable geometry turbocharger that has a turbine on which exhaust air is blown and a nozzle vane that changes the flow rate of the exhaust air blown on the turbine by its opening degree being changed is installed into the internal combustion engine. The cylinder temperature controlling means executes the cylinder temperature increase control such that the lower the intake air charging efficiency set by the adjustment of the nozzle vane opening degree of the variable geometry turbocharger, the greater the amount of increase in air-fuel mixture temperature.

Also in the case where the intake air charging efficiency brought about by the turbocharger is low, as in the case where the recirculation rate of the exhaust gas is high, the air-fuel mixture self-ignition temperature is increased. Therefore, the cylinder temperature increase control is executed accordingly to fill a shortage of the actual air-fuel mixture temperature relative to the air-fuel mixture self-ignition temperature. This allows the amount of preheat that is suitable relative to the exhaust gas recirculation rate as well as the intake air charging efficiency brought about by the turbocharger to be obtained.

An example of a technique of determining the shortage of the actual air-fuel mixture temperature relative to the air-fuel mixture self-ignition temperature is as follows. Specifically, ignition delay amount determining means that determines the ignition delay amount in the combustion of fuel injected in the main injection according to the state of vibration generation in the internal combustion engine in the combustion of fuel injected in the main injection is installed. The cylinder temperature controlling means executes the cylinder temperature increase control such that the greater the ignition delay amount determined by the ignition delay amount determining means, the greater the amount of increase in air-fuel mixture temperature.

This allows a shortage of the actual air-fuel mixture temperature relative to the air-fuel mixture self-ignition temperature to be determined without detecting the temperature within a cylinder or the pressure within a cylinder, and thus the configuration for this determination can be simple, enhancing the practical applicability of the present invention.

### [Advantageous Effects of Invention]

In the present invention, a cylinder preheating operation is performed based on the compositional change of an air-fuel mixture present in a cylinder as the recirculation rate of exhaust gas is increased so that the air-fuel mixture temperature when main injection is performed is no less than the self-ignition temperature thereof. Therefore, insufficiency of the amount of preheat at the main injection start timing is prevented, and the above-described successive combustion can be achieved in which combustion immediately starts after fuel injection with almost no ignition delay of fuel injected in main injection.

### [Brief Description of Drawings]

[Fig. 1]

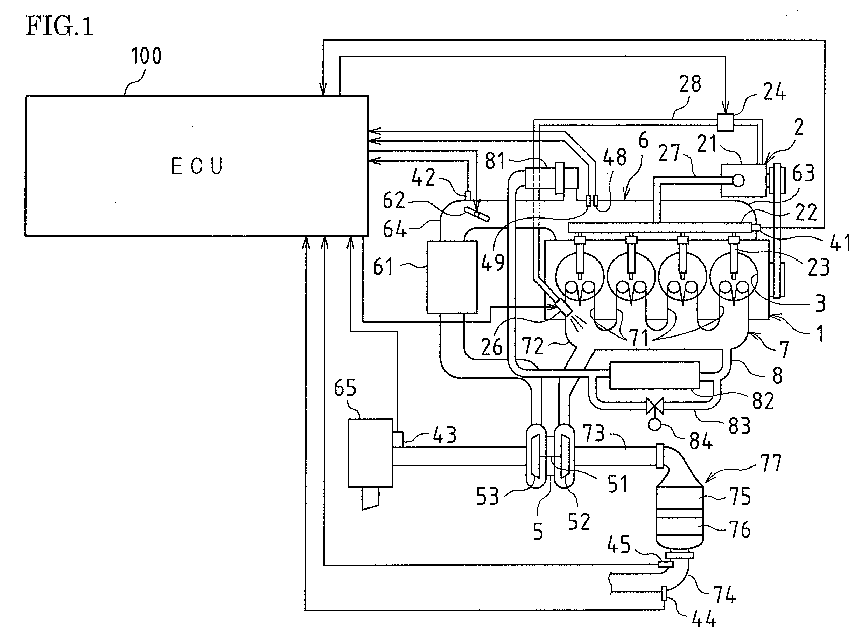

   Fig. 1 is a schematic configuration diagram of an engine and the control system thereof according to an embodiment.
[Fig. 2]

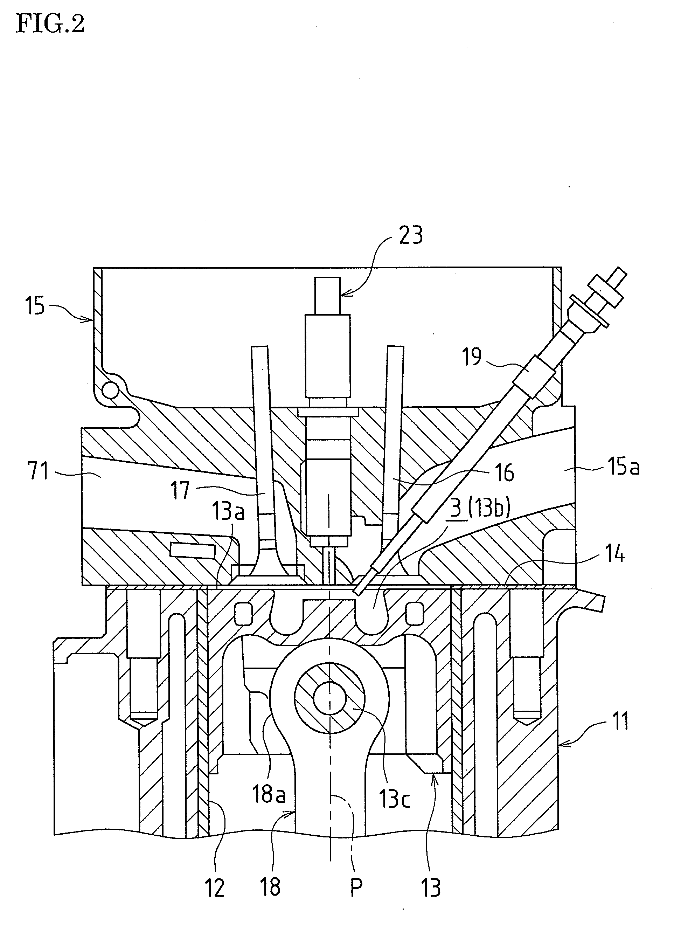

   Fig. 2 is a cross-sectional view showing the combustion chamber of a diesel engine and its surroundings.
[Fig. 3]

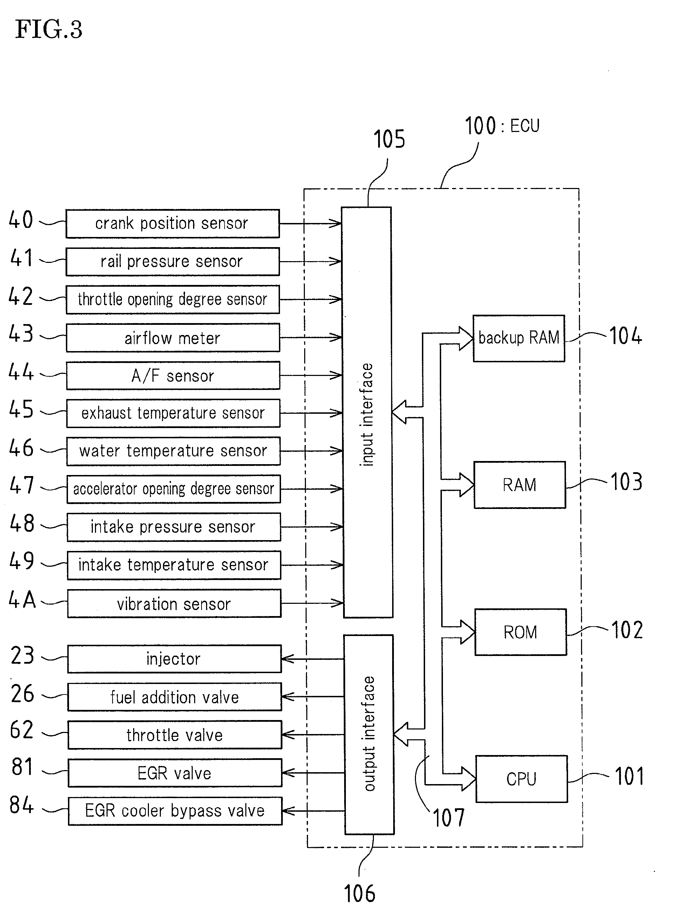

   Fig. 3 is a block diagram showing the configuration of a control system such as an ECU.
[Fig. 4]

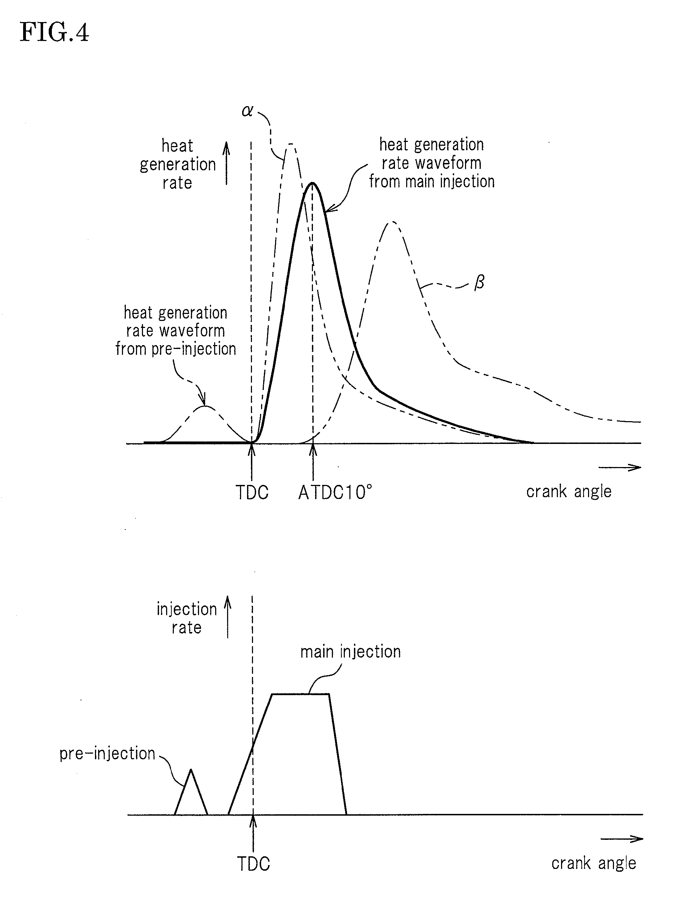

   Fig. 4 depicts waveform charts showing an ideal change in heat generation rate and a fuel injection pattern.
[Fig. 5]

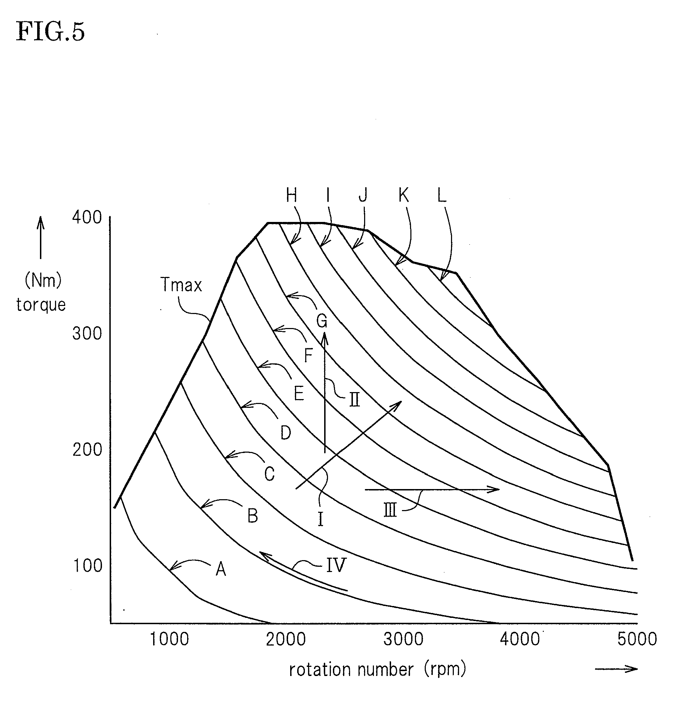

   Fig. 5 is a chart showing a fuel pressure setting map according to one embodiment that is referred to when a target fuel pressure is determined.
[Fig.6]

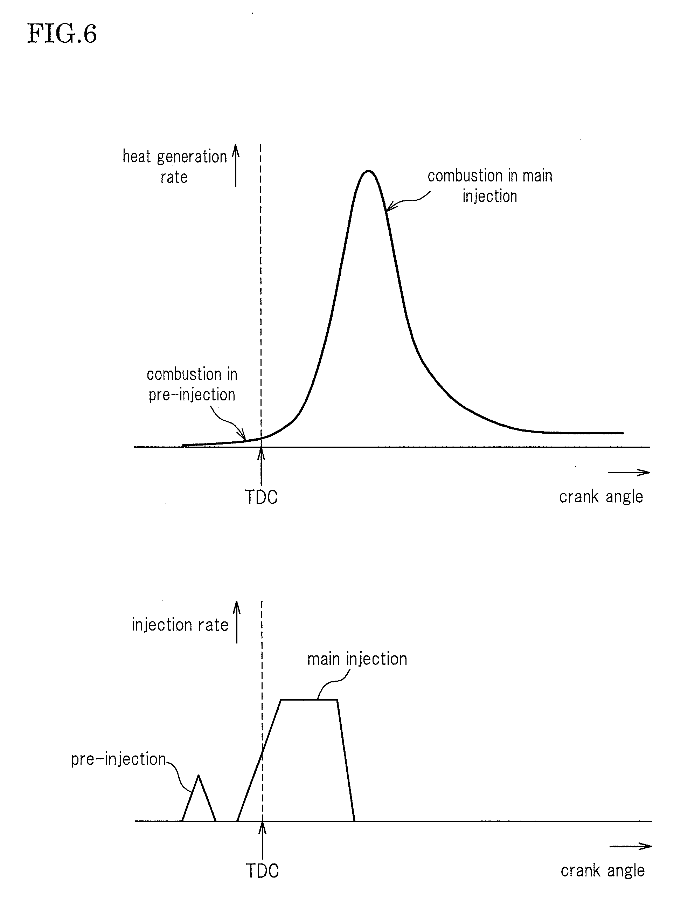

   Fig. 6 depicts waveform charts showing a change in heat generation rate and a fuel injection pattern in a case where pre-injection is executed at the same timing as conventional techniques when the EGR rate is relatively high.
[Fig.7]

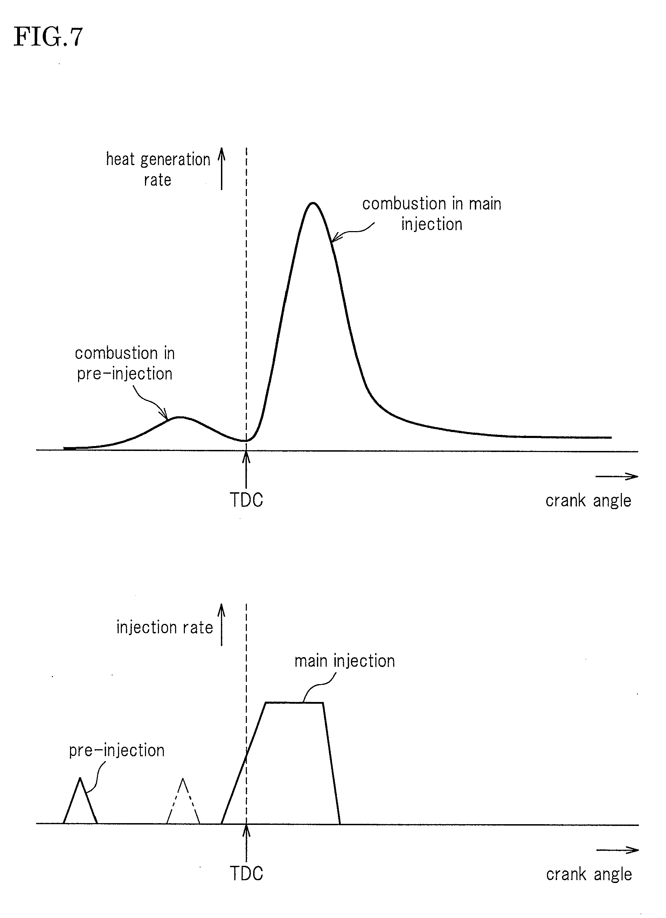

   Fig. 7 depicts waveform charts showing a change in heat generation rate and a fuel injection pattern in embodiment 1.
[fig.8]

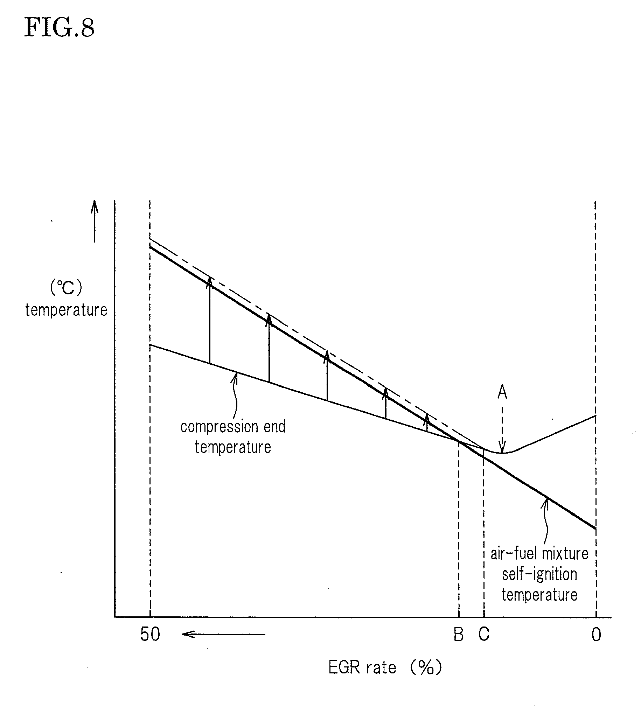

   Fig. 8 is a chart showing a change in air-fuel mixture self-ignition temperature and compression end temperature accompanied by the change in EGR rate.
[Fig. 9]

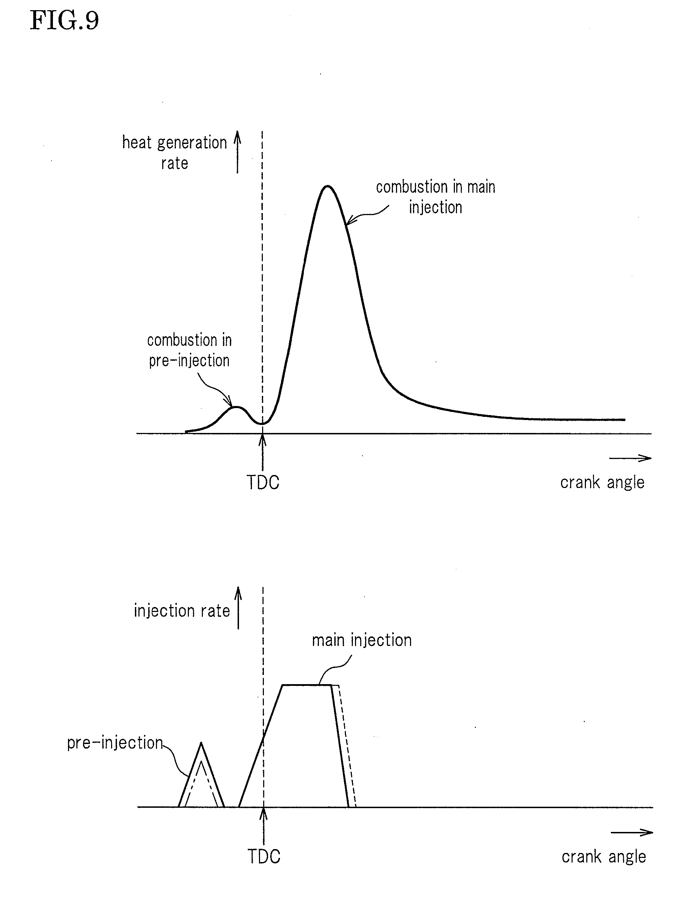

   Fig. 9 depicts waveform charts showing a change in heat generation rate and a fuel injection pattern in embodiment 2.
[Fig. 10]

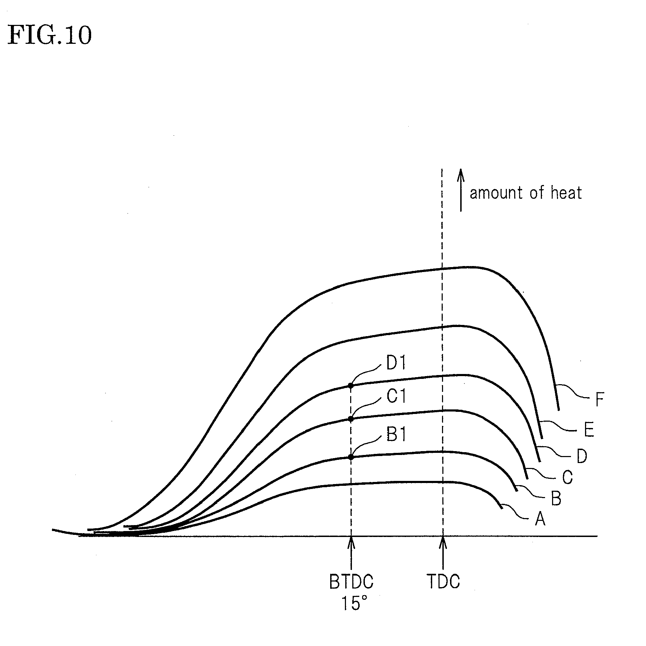

   Fig. 10 depicts a chart showing the relationship between pre-injection execution timing and the amount of heat generated in a cylinder at the execution timing.
[Fig. 11]

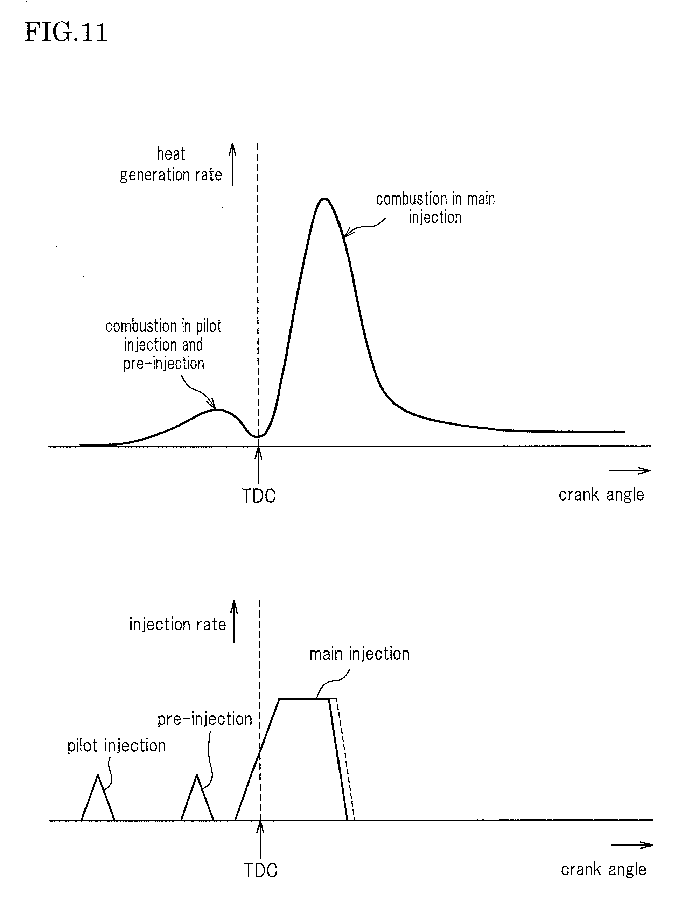

   Fig. 11 depicts waveform charts showing a change in heat generation rate and a fuel injection pattern in embodiment 3.
[Fig. 12]

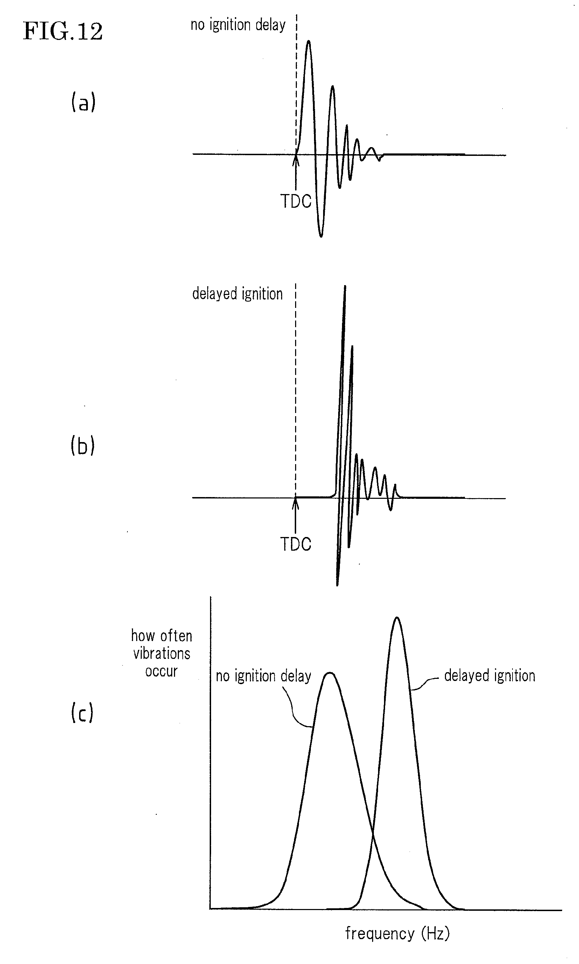

   Fig. 12(a) is an engine vibration waveform when no ignition delay occurs in main injection, Fig. 12(b) is an engine vibration waveform when ignition delay occurs in main injection, and Fig. 12(c) is a chart showing the results of analyzing these engine vibration waveforms.

### [Explanation of Reference]

- 1: Engine (internal combustion engine)
- 19: Glow plug
- 23: Injector (fuel injection valve)
- 6: Intake system
- 7: Exhaust system
- 8: EGR path
- 81: EGR valve
- 82: EGR cooler
- 83: EGR cooler bypass path
- 84: EGR cooler bypass valve (regulating valve)

### [Best Mode for Carrying Out the Invention]

An embodiment of the invention is described below with reference to the drawings. In the present embodiment, a case will be described in which the invention is applied to a common rail in-cylinder direct injection multi-cylinder (for example, inline four-cylinder) diesel engine (compression self-igniting internal combustion engine) mounted in an automobile.

### - Engine configuration -

First, the overall configuration of a diesel engine (referred to below as simply the engine) according to the present embodiment will be described. Fig. 1 is a schematic configuration diagram of an engine 1 and a control system of the engine 1 according to the present embodiment. Fig. 2 is a cross-sectional view showing a combustion chamber 3 of the diesel engine and parts in the vicinity of the combustion chamber 3.

As shown in Fig. 1, the engine 1 according to the present embodiment is configured as a diesel engine system having a fuel supply system 2, combustion chambers 3, an intake system 6, an exhaust system 7, and the like as its main portions.

The fuel supply system 2 is provided with a supply pump 21, a common rail 22, injectors (fuel injection valves) 23, a cutoff valve 24, a fuel addition valve 26, an engine fuel path 27, an added fuel path 28, and the like.

The supply pump 21 draws fuel from a fuel tank, and after putting the drawn fuel under high pressure, supplies the fuel to the common rail 22 via the engine fuel path 27. The common rail 22 has a function as an accumulation chamber where the high pressure fuel supplied from the supply pump 21 is held (accumulated) at a predetermined pressure, and this accumulated fuel is distributed to each injector 23. The injectors 23 are configured from piezo injectors within which a piezoelectric element (piezo element) is provided, and supply fuel by injection into the combustion chambers 3 by appropriately opening a valve. The details of control of fuel injection from the injectors 23 will be described later.

Also, the supply pump 21 supplies part of the fuel drawn from the fuel tank to the fuel addition valve 26 via the added fuel path 28. In the added fuel path 28, the cutoff valve 24 is provided in order to stop fuel addition by cutting off the added fuel path 28 during an emergency.

The fuel addition valve 26 is configured from an electronically controlled opening/closing valve whose valve opening period is controlled with an addition control operation by an ECU 100 that will be described later such that the amount of fuel added to the exhaust system 7 becomes a target addition amount (an addition amount such that exhaust A/F becomes target A/F), or such that a fuel addition timing becomes a specific timing. In other words, a desired amount of fuel is supplied from the fuel addition valve 26 by injection to the exhaust system 7 (to an exhaust manifold 72 from exhaust ports 71) at a suitable timing.

The intake system 6 is provided with an intake manifold 63 connected to an intake port 15a formed in a cylinder head 15 (see Fig. 2), and an intake pipe 64 that constitutes an intake path is connected to the intake manifold 63. Also, in this intake path, an air cleaner 65, an airflow meter 43, and a throttle valve 62 are disposed in order from the upstream side. The airflow meter 43 outputs an electrical signal according to the amount of air that flows into the intake path via the air cleaner 65.

The exhaust system 7 is provided with the exhaust manifold 72 connected to the exhaust ports 71 formed in the cylinder head 15, and exhaust pipes 73 and 74 that constitute an exhaust path are connected to the exhaust manifold 72. Also, in this exhaust path a maniverter (exhaust purification apparatus) 77 is disposed that is provided with a NOx storage catalyst (NSR catalyst: NOx storage reduction catalyst) 75 and a diesel particulate-NOx reduction catalyst (DPNR catalyst) 76. Hereinafter, this NSR catalyst 75 and DPNR catalyst 76 will be described.

The NSR catalyst 75 is a storage reduction NOx catalyst and is configured using, for example, alumina (Al₂O₃) as a support, with, for example, an alkali metal such as potassium (K), sodium (Na), lithium (Li), or cesium (Cs), an alkaline earth element such as barium (Ba) or calcium (Ca), a rare earth element such as lanthanum (La) or yttrium (Y), and a precious metal such as platinum (Pt) supported on this support.

The NSR catalyst 75, in a state in which a large amount of oxygen is present in exhaust gas, stores NOx, and in a state in which the oxygen concentration in exhaust gas is low and a large amount of reduction component (for example, an unburned component of fuel (HC)) is present, reduces NOx to NO₂ or NO and releases the resulting NO₂ or NO. NOx that has been released as NO₂ or NO is further reduced due to quickly reacting with HC or CO in exhaust gas and becomes N₂. Also, by reducing NO₂ or NO, HC and CO themselves are oxidized and thus become H₂O and CO₂. In other words, by suitably adjusting the oxygen concentration or the HC component in exhaust gas introduced into the NSR catalyst 75, it is possible to purify HC, CO, and NOx in the exhaust gas. In the configuration of the present embodiment, adjustment of the oxygen concentration or the HC component in exhaust gas can be performed with an operation to add fuel from the fuel addition valve 26.

On the other hand, in the DPNR catalyst 76, a NOx storage reduction catalyst is supported on a porous ceramic structure, for example, and PM in exhaust gas is captured while passing through a porous wall. When the air-fuel ratio of the exhaust gas is lean, NOx in the exhaust gas is stored in the NOx storage reduction catalyst, and when the air-fuel ratio is rich, the stored NOx is reduced and released. Furthermore, a catalyst that oxidizes/burns the captured PM (for example, an oxidization catalyst whose main component is a precious metal such as platinum) is supported on the DPNR catalyst 76.

Here, the combustion chamber 3 of the diesel engine and parts in the vicinity of the combustion chamber 3 will be described with reference to Fig. 2. As shown in Fig. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide in the vertical directions.

The combustion chamber 3 is formed on the top side of a top face 13a of the piston 13. In other words, the combustion chamber 3 is defined by a lower face of the cylinder head 15 installed on top of the cylinder block 11 via a gasket 14, an inner wall face of the cylinder bore 12, and the top face 13a of the piston 13. A cavity (recess) 13b is concavely provided in substantially the center of the top face 13a of the piston 13, and this cavity 13b also constitutes part of the combustion chamber 3.

A small end portion 18a of a connecting rod 18 is linked to the piston 13 by a piston pin 13c, and a large end of the connecting rod 18 is linked to a crankshaft that is an engine output shaft. Thus, back and forth movement of the piston 13 within the cylinder bore 12 is transmitted to the crankshaft via the connecting rod 18, and engine output is obtained due to rotation of this crank shaft. Also, a glow plug 19 is disposed facing the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

In the cylinder head 15, the intake port 15a that introduces air into the combustion chamber 3 and the exhaust port 71 that discharges exhaust gas from the combustion chamber 3 are formed, and an intake valve 16 that opens/closes the intake port 15a and an exhaust valve 17 that opens/closes the exhaust port 71 are disposed. The intake valve 16 and the exhaust valve 17 are disposed facing each other on either side of a cylinder center line P. That is, this engine 1 is configured as a cross flow-type engine. Also, the injector 23 that injects fuel directly into the combustion chamber 3 is installed in the cylinder head 15. The injector 23 is disposed substantially in the center above the combustion chamber 3, in an erect orientation along the cylinder center line P, and injects fuel introduced from the common rail 22 toward the combustion chamber 3 at a predetermined timing.

Furthermore, as shown in Fig. 1, the engine 1 is provided with a turbocharger 5. This turbocharger 5 is equipped with a turbine wheel 52 and a compressor wheel 53 that are linked via a turbine shaft 51. The compressor wheel 53 is disposed facing the inside of the intake pipe 64, and the turbine wheel 52 is disposed facing the inside of the exhaust pipe 73. Thus the turbocharger 5 uses exhaust flow (exhaust pressure) received by the turbine wheel 52 to rotate the compressor wheel 53, thereby performing a so-called supercharging operation that increases the intake pressure. In this embodiment, the turbocharger 5 is a variable nozzle-type turbocharger, in which a variable nozzle vane mechanism (not shown) is provided on the turbine wheel 52 side, and by adjusting the opening degree of the nozzle vane provided in this variable nozzle vane mechanism it is possible to adjust the supercharging pressure of the engine 1.

An intercooler 61 for forcibly cooling intake air heated due to supercharging with the turbocharger 5 is provided in the intake pipe 64 of the intake system 6. The throttle valve 62 provided on the downstream side from the intercooler 61 is an electronically controlled opening/closing valve whose opening degree is capable of stepless adjustment, and has a function to constrict the area of the channel of intake air under predetermined conditions, and thus adjust (reduce) the amount of intake air supplied.

Also, the engine 1 is provided with an exhaust gas recirculation path (EGR path) 8 that connects the intake system 6 and the exhaust system 7. The EGR path 8 decreases the combustion temperature by appropriately directing part of the exhaust gas back to the intake system 6 and resupplying that exhaust gas to the combustion chamber 3, thus reducing the amount of NOx generated. Also, provided in the EGR path 8 are an EGR valve 81 that by being opened/closed steplessly under electronic control is capable of freely adjusting the flow rate of exhaust gas that flows through the EGR path 8, and an EGR cooler 82 for cooling exhaust that passes through (recirculates through) the EGR path 8.

Also, an EGR cooler bypass path 83 that bypasses the EGR cooler 82 is connected to the EGR path 8 in the present embodiment. Furthermore, in the EGR cooler bypass path 83, an electronically controlled EGR cooler bypass valve 84 is provided whose opening degree can be adjusted. By adjusting the opening degree of the EGR cooler bypass valve 84, it is possible to adjust the amount of exhaust gas flowing back to the intake system 6 that passes through the EGR cooler 82. That is, the temperature of exhaust gas that recirculates in the intake system 6 can be controlled.

### - Sensors -

Various sensors are installed at respective sites of the engine 1, and these sensors output signals related to environmental conditions at the respective sites and the operating state of the engine 1.

For example, the airflow meter 43 outputs a detection signal according to the flow rate of intake air (the amount of intake air) on the upstream side of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that continuously changes according to the oxygen concentration in exhaust gas on the downstream side of the maniverter 77 of the exhaust system 7. An exhaust temperature sensor 45 likewise outputs a detection signal according to the temperature of exhaust gas (exhaust temperature) on the downstream side of the maniverter 77 of the exhaust system 7. A rail pressure sensor 41 outputs a detection signal according to the pressure of fuel accumulated in the common rail 22. A throttle opening degree sensor 42 detects the opening degree of the throttle valve 62.

### -ECU-

As shown in Fig. 3, the ECU 100 is provided with a CPU 101, a ROM 102, a RAM 103, a backup RAM 104, and the like. In the ROM 102, various control programs, maps that are referred to when executing those various control programs, and the like are stored. The CPU 101 executes various computational processes based on the various control programs and maps stored in the ROM 102. The RAM 103 is a memory that temporarily stores data resulting from computation with the CPU 101 or data that has been input from the respective sensors. The backup RAM 104 is a nonvolatile memory that stores that data or the like to be saved when the engine 1 is stopped, for example.

The CPU 101, the ROM 102, the RAM 103, and the backup RAM 104 are connected to each other via a bus 107, and are connected to an input interface 105 and an output interface 106 via the bus 107.

The input interface 105 is connected to the rail pressure sensor 41, the throttle position sensor 42, the airflow meter 43, the A/F sensor 44, the exhaust temperature sensor 45, the intake pressure sensor 48, and the intake temperature sensor 49. Furthermore, the input interface 105 is connected to a water temperature sensor 46 that outputs a detection signal according to the coolant temperature of the engine 1, an accelerator opening degree sensor 47 that outputs a detection signal according to the amount of accelerator pedal depression, a crank position sensor 40 that outputs a detection signal (pulse) each time the output shaft (crankshaft) of the engine 1 rotates a specific angle, a vibration sensor (knock sensor) 4A that detects vibrations of the cylinder block 11 that are generated in conjunction with the combustion of air-fuel mixture in the combustion chamber 3, and the like. On the other hand, the output interface 106 is connected to the injectors 23, the fuel addition valve 26, the throttle valve 62, the EGR valve 81, the EGR cooler bypass valve 84, and the like.

The ECU 100 executes various control of the engine 1 based on the output of the various sensors as described above. Furthermore, the ECU 100 manages pilot injection, pre-injection, main injection, after-injection, and post-injection, all of which will be described later, as control of fuel injection by the injectors 23.

### - Mode of fuel injection -

Following is a general description of the operation of pilot injection, pre-injection, main injection, after-injection, and post-injection in the present embodiment.

### (Pilot injection)

Pilot injection is an injection operation in which a small amount of fuel is injected from the injectors 23 as necessary prior to main injection. More specifically, it is a fuel injection operation performed to sufficiently increase the temperature of compressed gas (temperature in a cylinder) between when fuel injection is temporarily interrupted after execution of this pilot injection and when main injection is started. That is, the function of the pilot injection in this embodiment is solely for preheating the inside of a cylinder. In other words, the pilot injection in this embodiment is an injection operation for preheating gas within the combustion chamber 3 (operation of supplying fuel for preheating).

Specifically, in order to achieve an appropriate spray distribution and local concentration, the injection amount per instance in pilot injection is set to a minimum limit injection amount (for example, 1.5 mm³) and the number of injections is set, and thus the necessary total pilot injection amount is ensured. In the case where pilot injection is performed through a plurality of divided injections, the interval of the divided injections is determined according to the responsiveness (speed of opening/closing operation) of the injectors 23. This interval is set to 200 µs, for example. Moreover, the injection start timing for pilot injection is set, for example, at a crank angle of 80° or thereafter before the compression top dead center (BTDC) of the piston 13. The injection amount per instance, the interval, and the injection start timing of pilot injection are not limited to the values given above.

### (Pre-injection)

Pre-injection is an injection operation in which a small amount of fuel is injected from the injectors 23 prior to main injection. Pre-injection is an injection operation for suppressing fuel ignition delay in main injection and for leading to stable diffusive combustion, and is also called sub injection. Also, the pre-injection of the present embodiment not only has the function to slow the initial combustion speed in the aforementioned main injection, but also has the preheating function to increase the temperature within a cylinder.

Specifically, in the present embodiment, the pre-injection amount is set to, for example, 10% of the total fuel injection amount (the sum of the injection amount in pre-injection and the injection amount in main injection) for obtaining the required torque determined according to the operating state, such as the engine rotation number, the amount of accelerator operation, the coolant temperature, and the intake air temperature. This proportion of the pre-injection amount relative to the total fuel injection amount is set according to, for example, the amount of heat required for preheating the inside of a cylinder.

In this case, if the total amount of fuel to be injected is less than 15 mm³, the injection amount in pre-injection is less than the minimum limit injection amount for the injectors 23 (1.5 mm³), so pre-injection is not executed. Note that, in this case, merely the minimum limit injection amount (1.5 mm³) of fuel for the injectors 23 may be injected in pre-injection. On the other hand, if the total injection amount in pre-injection is required to be greater than or equal to two times the minimum limit injection amount for the injectors 23 (e.g., 3 mm³ or greater), the total injection amount necessary in this pre-injection may be ensured by performing pre-injection a plurality of times.

### (Successive combustion)

As described above, sufficient preheating within a cylinder is performed in the present embodiment by pilot injection and pre-injection that are performed as necessary. Due to this preheating, when main injection that will be described later is started, fuel injected in main injection undergoes thermal decomposition by being immediately exposed to a temperature environment having a temperature no less than the self-igniting temperature, and combustion starts immediately after injection.

Specifically, fuel ignition delay in a diesel engine includes physical delay and chemical delay. Physical delay refers to the time it takes fuel droplets to evaporate/mix, and depends on the gas temperature in the combustion field. On the other hand, chemical delay refers to the time it takes fuel vapor to chemically bond/decompose and to oxidatively generate heat. In a condition in which preheating of a cylinder is sufficient as described above, such physical delay is minimized, and as a result, ignition delay also is minimized.

Therefore, the combustion of fuel injected in main injection is barely executed in the form of premixed combustion. As a result, the control of fuel injection timing substantially serves as the control of combustion timing, and it is thus possible to significantly improve combustion controllability. In other words, the combustion of a diesel engine heretofore is largely executed in the form of premixed combustion, but in the present embodiment, minimizing premixed combustion enables combustion controllability to be significantly improved through the control of a heat generation rate waveform (the ignition timing and the amount of heat generated) achieved by controlling the fuel injection timing and the amount of fuel injected (by controlling the injection rate waveform). In the present embodiment, this novel form of combustion is referred to as "successive combustion (combustion that immediately starts after fuel injection)" or "controlled combustion (combustion actively controlled by the fuel injection timing and the amount of fuel injected)."

### (Main injection)

Main injection is an injection operation for generating torque of the engine 1 (operation of supplying fuel for torque generation). In the present embodiment, an injection amount is set that is obtained by subtracting the injection amount in the above-described pre-injection from the above-described total amount of fuel injected for obtaining the required torque determined according to the operating state, such as the engine rotation number, the amount of accelerator operation, the coolant temperature, and the intake air temperature.

Here is a brief description of a control process for the pre-injection and the main injection described above.

First, regarding a torque requirement value of the engine 1, a sum of the injection amount in the pre-injection and the injection amount in the main injection is obtained as the total amount of fuel to be injected. In other words, the total amount of fuel to be injected is calculated as an amount for generating torque required of the engine 1.

The torque requirement value of the engine 1 is determined according to the operating state, such as the engine rotation number, amount of accelerator operation, coolant temperature, and intake air temperature, and according to the status of use of accessories and the like. For example, the greater the engine rotation number (engine rotation number calculated based on the value detected by the crank position sensor 40) or the greater the amount of accelerator operation (the amount of accelerator pedal depressed detected by the accelerator opening degree sensor 47) (the greater the accelerator opening degree), the greater the resulting torque requirement value of the engine 1.

After the total amount of fuel to be injected has been calculated in this way, a ratio (division ratio) of the injection amount in the pre-injection to this total amount of fuel to be injected is set. In other words, the pre-injection amount is set as an amount obtained by dividing the total amount of fuel to be injected using the aforementioned division ratio. This division ratio (pre-injection amount) is obtained as a value at which "suppression of fuel ignition delay in main injection" and "keeping the heat generation rate peak value of combustion in main injection low" are both achieved simultaneously. With these two types of suppression, it is possible to achieve a reduction in combustion noise and a reduction in the amount of NOx generated, while also ensuring high engine torque. Note that, in the present embodiment, the division ratio is set to 10%.

### (After-injection)

After-injection is an injection operation for increasing the exhaust gas temperature. Specifically, in the present embodiment, after-injection is executed at a timing such that the majority of the combustion energy of fuel supplied by this after-injection is obtained as exhaust heat energy instead of being converted into engine torque. Also, in this after-injection as well, in the same way as the case of the pilot injection described above, the minimum injection rate is set (for example, an injection amount of 1.5 mm³ per instance), and the total after-injection amount necessary in this after-injection is ensured by executing after-injection a plurality of times.

### (Post-injection)

Post-injection is an injection operation for increasing the temperature of the aforementioned maniverter 77 by directly introducing fuel into the exhaust system 7. For example, when the amount of PM captured by and deposited in the DPNR catalyst 76 has exceeded a predetermined amount (for example, indicated from detection of a before/after pressure difference of the maniverter 77), post-injection is executed.

### - Fuel injection pressure -

The fuel injection pressure when executing each of the above-described fuel injections is determined based on the internal pressure of the common rail 22. In regard to the internal pressure of the common rail, normally, the higher the engine load and the greater the engine rotation number, the greater the target value for the pressure of fuel supplied from the common rail 22 to the injectors 23 (i.e., the target rail pressure). In other words, when the engine load is high, a large amount of air is drawn into the combustion chamber 3, making it necessary to inject a large amount of fuel into the combustion chamber 3 from the injectors 23, and therefore the pressure of injection from the injectors 23 needs to be high. Also, when the engine rotation number is high, the period during which injection is possible is short, making it necessary to inject a large amount of fuel per unit time, and therefore the pressure of injection from the injectors 23 needs to be high. In this way, the target rail pressure is normally set based on the engine load and the engine rotation number. A specific method of setting this fuel pressure target value will be described below.

The optimum values of fuel injection parameters for fuel injection such as the pilot injection and the main injection described above differ according to the temperature conditions of the engine 1, intake air, and the like.

For example, the ECU 100 adjusts the amount of fuel discharged by the supply pump 21 such that the common rail pressure becomes the same as the target rail pressure set based on the engine operating state, i.e., such that the fuel injection pressure matches the target injection pressure. Also, the ECU 100 determines the amount of fuel to be injected and the form of fuel injection based on the engine operating state. Specifically, the ECU 100 calculates the engine rotation speed based on the value detected by the crank position sensor 40 and obtains the amount of accelerator pedal depression (accelerator opening degree) based on the value detected by the accelerator opening degree sensor 47, and then determines the total amount of fuel to be injected (the sum of the injection amount in pre-injection and the injection amount in main injection) based on the engine rotation speed and the accelerator opening degree.

### - Technique for setting target fuel pressure -

The following describes the technical idea in setting a target fuel pressure in the present embodiment.

### (Basic technique for setting target fuel pressure)

In the diesel engine 1, it is important to simultaneously satisfy demands such as improving exhaust emissions by decreasing the amount of NOx generated, reducing combustion noise during a combustion stroke, and ensuring sufficient engine torque. The present inventors, noting that as a method of simultaneously satisfying such demands, it is effective to suitably control the state of change in heat generation rate within a cylinder during a combustion stroke (state of change expressed by a heat generation rate waveform), established the method of setting a target fuel pressure described below as a method of controlling the state of change in heat generation rate.

Fig. 4 depicts waveform charts showing an ideal change in heat generation rate and a fuel injection pattern (ideal fuel injection pattern in the case where the EGR rate is relatively low (e.g., an EGR rate of less than 10%)).

In the heat generation rate waveform shown in Fig. 4, the horizontal axis represents the crank angle, the vertical axis represents heat generation rate, and the solid line indicates an ideal heat generation rate waveform regarding the combustion of fuel injected in main injection. In Fig. 4, for easier understanding, a heat generation rate waveform for one fuel injection in main injection is presented (when multiple divided injections are performed in main injection, this figure is for the first divided injection of main injection). In the figure, "TDC" indicates a crank angle position corresponding to the compression top dead center of the piston 13. In this heat generation rate waveform, for example, the combustion of fuel injected in main injection is started when the piston 13 is at the compression top dead center (TDC), heat generation rate reaches its maximum value (peak value) at a predetermined piston position after the compression top dead center (e.g., a point 10° after the compression top dead center (10° ATDC)), and furthermore the combustion of fuel injected in main injection ends at another predetermined piston position after the compression top dead center (e.g., a point 25° after the compression top dead center (25° ATDC)). In order for combustion to end no later than this point, in the present embodiment, the injection of fuel in main injection is ended no later than 22° after the compression top dead center (22° ATDC). Executing the combustion of an air-fuel mixture in this state of change in heat generation rate creates a situation where the combustion of 50% of the air-fuel mixture present in a cylinder is complete at 10° after the compression top dead center (10° ATDC). In other words, about 50% of the total amount of heat generated in an expansion stroke is generated no later than 10° ATDC, and the engine 1 can be operated with high thermal efficiency.

The waveform indicated by the dashed single-dotted line in Fig. 4 is a heat generation rate waveform for combustion (combustion when the EGR rate is relatively low) of fuel that is injected in pre-injection. Accordingly, stable successive combustion of fuel injected in main injection is attained. For example, an amount of heat of 10 J is generated by combustion of fuel injected in this pre-injection. This amount is not limited to the value in this embodiment. For example, this amount is suitably determined according to the aforementioned total amount of fuel to be injected. Also, although not shown, pilot injection is performed prior to pre-injection as necessary, and thus the temperature within the cylinder is sufficiently increased so that ignition of fuel injected in main injection is well-ensured.

Also, the waveform indicated by a dashed double-dotted line α in Fig. 4 is a heat generation rate waveform created when the fuel injection pressure is set higher than the appropriate value. The combustion speed and the peak value are both excessively high, and there is concern regarding an increase in combustion noise and the amount of NOx generated. On the other hand, the waveform indicated by a dashed double-dotted line β in Fig. 4 is a heat generation rate waveform created when the fuel injection pressure is set lower than the appropriate value. The combustion speed is low and the timing at which the peak appears is shifted toward the angle of delay side to a large extent, and there is concern that sufficient engine torque may not be attained.

As described above, the technique for setting a target fuel pressure according to the present embodiment is based on a technical idea that combustion efficiency is improved by optimizing the state of change in heat generation rate (optimizing the heat generation rate waveform). In order to achieve this, a target fuel pressure is set according to a fuel pressure setting map as described below.

### (Fuel pressure setting map)

Fig. 5 is a fuel pressure setting map that is referred to when the target fuel pressure is determined in the present embodiment. This fuel pressure setting map is stored in, for example, the ROM102. Also, in this fuel pressure setting map, the horizontal axis denotes the engine rotation number and the vertical axis denotes the engine torque. Tmax in Fig. 5 denotes the maximum torque line.

As a feature of this fuel pressure setting map, the equal-fuel injection pressure lines denoted by A to L in the figure (equal-fuel injection pressure regions) are allocated to equal power lines (equal-output regions) of the output (power) determined from the rotation number and the torque of the engine 1. In other words, this fuel pressure setting map is set such that the equal-power lines and the equal-fuel injection pressure lines substantially match.

Control of the valve opening period (injection rate waveform) of the injectors 23 through determining the fuel pressure according to this fuel pressure setting map allows the amount of fuel injected during the valve opening period to be specified, and it is thus possible to simplify and optimize the control of the amount of fuel injected.

Specifically, the curved line A in Fig. 5 is a line representing an engine output of 10 kW, and a line representing a fuel injection pressure of 30 MPa is allocated to this. Similarly, the curved line B is a line representing an engine output of 20 kW, and a line representing a fuel injection pressure of 45 MPa is allocated to this. The curved line C is a line representing an engine output of 30 kW, and a line representing a fuel injection pressure of 60 MPa is allocated to this. The curved line D is a line representing an engine output of 40 kW, and a line representing a fuel injection pressure of 75 MPa is allocated to this. The curved line E is a line representing an engine output of 50 kW, and a line representing a fuel injection pressure of 90 MPa is allocated to this. The curved line F is a line representing an engine output of 60 kW, and a line representing a fuel injection pressure of 105 MPa is allocated to this. The curved line G is a line representing an engine output of 70 kW, and a line of a fuel injection pressure of 120 MPa is allocated to this. The curved line H is a line representing an engine output of 80 kW, and a line of a fuel injection pressure of 135 MPa is allocated to this. The curved line I is a line representing an engine output of 90 kW, and a line representing a fuel injection pressure of 150 MPa is allocated to this. The curved line J is a line representing an engine output of 100 kW, and a line representing a fuel injection pressure of 165 MPa is allocated to this. The curved line K is a line representing an engine output of 110 kW, and a line representing a fuel injection pressure of 180 MPa is allocated to this line. The curved line L is a line representing an engine output of 120 kW, and a line representing a fuel injection pressure of 200 MPa is allocated to this. The values are not limited to these, and are suitably set according to the performance characteristics of the engine 1.

Moreover, the lines A to L above are set such that the lower the engine rotation number, the smaller the extent of the change in fuel injection pressure relative to the change in engine output. That is, the space between the lines is broader at high engine rotation numbers than at low engine rotation numbers. The space between the lines may be set evenly.

According to the fuel pressure setting map so prepared, a target fuel pressure that is suitable for the operation state of the engine 1 is set, and the supply pump 21 and the like are controlled accordingly.

Specifically, the fuel injection pressure is increased when the engine rotation number and the engine torque are both increased (see arrow I in Fig. 5), when the engine torque is increased while the engine rotation number remains constant (see arrow II in Fig. 5), and when the engine rotation number is increased while the engine torque remains constant (see arrow III in Fig. 5). Thus, the amount of fuel to be injected that is suitable relative to the amount of intake air in the case where the engine torque (engine load) is high can be ensured, and the necessary amount of fuel to be injected in the case where the engine rotation number is high can be ensured within a short period of time by increasing the amount of injected per unit time. Therefore, it is possible to achieve a mode of combustion that is represented by the ideal heat generation rate waveform indicated by the solid line in Fig. 4 regardless of the engine output or the engine rotation number, thereby enabling demands such as improving exhaust emissions by decreasing the amount of NOx generated, reducing combustion noise during an expansion stroke, and ensuring sufficient engine torque to be satisfied simultaneously.

Meanwhile, when the engine output does not change even after the engine rotation number and the engine torque are changed (see arrow IV in Fig. 5, for example), the previously set appropriate fuel injection pressure value is maintained without changing the fuel injection pressure. In other words, the fuel injection pressure is not changed when the state of engine operation changes along the equal-fuel injection pressure line (matching the equal-power line), and the mode of combustion that is represented by the aforementioned ideal heat generation rate waveform is maintained. In this case, demands such as improving exhaust emissions by decreasing the amount of NOx generated, reducing combustion noise during an expansion stroke, and ensuring sufficient engine torque can be simultaneously satisfied continuously.

As described above, according to the fuel pressure setting map of the present embodiment, there is an unambiguous correlation between the output (power) and the fuel injection pressure (common rail pressure) of the engine 1, and in a situation where the engine output is changed due to the change of at least one of the engine rotation number and the engine torque, a fuel injection is executed at a correspondingly suitable fuel pressure, while in a situation where the engine output is not changed even after the engine rotation number or the engine torque are changed, the fuel pressure is maintained at the previously set appropriate value. This enables the state of change in heat generation rate to be brought close to the ideal state over the entire engine operation range. Moreover, specifying the fuel pressure in this way allows an unambiguous correlation to be provided between the valve opening period and the fuel injection of the injectors 23, and in order to attain a necessary injection amount, it is thus only necessary to specify the valve opening period of the injectors 23 during injection, thereby enhancing controllability. Furthermore, providing an unambiguous correlation between the output and the fuel injection pressure (common rail pressure) of the engine 1 as in this fuel pressure setting map establishes a systematic fuel pressure setting technique that is universally applicable to various engines, and it is thus possible to simplify the preparation of a fuel pressure setting map for setting a suitable fuel injection pressure according to the operation state of the engine 1.

### - Cylinder temperature increase control -

Next, cylinder temperature increase control that is a characteristic operation in the present embodiment will be described.

In a situation where the opening degree of the EGR valve 81 is set large and there are large amounts of exhaust gas that recirculates in the intake system 6 via the EGR path 8, i.e., the EGR rate (proportion of exhaust gas relative to the total of air (fresh air) and exhaust gas in the intake manifold 63) is high, the oxygen concentration in intake air is lower and the efficiency of charging into a cylinder is lower than in a situation where the EGR rate is low. Therefore, when fuel injected in pre-injection starts burning, it burns very slowly and a relatively long period of time is required until the amount of heat necessary to sufficiently preheat the inside of a cylinder is obtained. If the injection timing and the injection amount of conventional pre-injection are employed, main injection may start before the amount of heat that is generated by the combustion of fuel injected in this pre-injection is sufficiently obtained, and the amount of preheat available at the main injection start timing may thus be insufficient.

Fig. 6 shows a change in heat generation rate and a fuel injection pattern in the case where pre-injection is executed at the same timing and injection amount (for example, 1.5 mm³) as in conventional techniques when the EGR rate is relatively high (for example, an EGR rate of 40%). As can be understood from this heat generation rate waveform, when the EGR rate is relatively high, the combustion of fuel injected in pre-injection is very slow, main injection starts before the amount of heat that is generated by the combustion of fuel injected in this pre-injection is sufficiently obtained (before heat generation rate in pre-injection is sufficiently high), and the amount of preheat available in a cylinder at the main injection start timing is insufficient, resulting in the ignition delay of fuel injected in this main injection. Then, this ignition delay results in a situation where combustion noise is increased.

In the embodiments described below, control (cylinder temperature increase control by cylinder temperature controlling means) is performed for preventing a situation, for example, where a high EGR rate results in an insufficient amount of preheat at the main injection start timing.

Specifically, in the first embodiment, pre-injection injection timing control is performed; in the second embodiment, pre-injection injection amount control is performed; in the third embodiment, pilot injection execution/nonexecution control is performed; in the fourth embodiment, heating control is performed with the glow plug 19; in the fifth embodiment, control of the amount of exhaust gas cooled by the EGR cooler 82 is performed; and in the sixth embodiment, pre-injection injection amount and injection timing control is performed.

Hereinafter, the embodiments of cylinder temperature increase control will be described.

### (First embodiment)

In the present embodiment, the injection timing of the aforementioned pre-injection is changed according to the EGR rate.

The higher the EGR rate, the greater the amount of exhaust gas contained in intake air. As a result, the oxygen concentration in intake air becomes lower and the cylinder charging efficiency becomes lower. When the charging efficiency is lowered in this way, the self-ignition temperature of an air-fuel mixture becomes higher, and if a cylinder is not sufficiently preheated, a favorable combustion state cannot be obtained, making the above-described successive combustion impossible.

Therefore, in the present embodiment, the higher the EGR rate, the farther the injection timing of pre-injection is shifted toward the angle of advance side. Accordingly, the combustion start timing of fuel injected in pre-injection is also shifted toward the angle of advance side.

Fig. 7 shows a change in heat generation rate and a fuel injection pattern after the injection timing of pre-injection has been shifted toward the angle of advance side as mentioned above. The dashed double-dotted line in the fuel injection pattern shows the injection timing of conventional pre-injection.

As shown in Fig. 7, setting the pre-injection timing toward the angle of advance side (for example, 30° BTDC) extends the time from the execution of pre-injection to the execution of main injection. In other words, the time for sufficiently preheating the inside of a cylinder by the combustion of fuel injected in pre-injection is secured as a long period of time. Thus, main injection is started after the inside of the cylinder has been sufficiently preheated by the combustion of fuel injected in pre-injection (see the heat generation rate waveform in Fig. 7). As a result, insufficiency of the amount of preheat at the main injection start timing is prevented, and the above-described successive combustion can be achieved in which combustion immediately starts after fuel injection with almost no ignition delay once fuel injected in main injection undergoes thermal decomposition by being immediately exposed to a cylinder temperature environment that has a temperature no less than the self-ignition temperature (for example, 850 K).

Fig. 8 shows a change in compression end temperature (temperature within a cylinder when the piston 13 reaches the TDC) as the EGR rate is changed and a change in air-fuel mixture self-ignition temperature according to the EGR rate.

As stated above, the higher the EGR rate, the greater the amount of exhaust gas contained in intake air, the lower the oxygen concentration in intake air, and the lower the cylinder charging efficiency. Therefore, as the EGR rate is increased, the air-fuel mixture self-ignition temperature increases at a constant rate (see the change in air-fuel mixture self-ignition temperature indicated by the bold line in Fig. 8).

On the other hand, in a situation where the EGR rate is relatively low, as exhaust gas is recirculated in the intake system 6, the flow resistance against fresh air increases, and due to the reduction in the amount of exhaust gas flowing in the exhaust system 7, the amount of work done by the turbine of the turbocharger 5 is reduced. Accordingly, the efficiency of charging into the intake system 6 is reduced, and therefore the compression end temperature tends to decrease as the EGR rate is increased. Then, when the EGR rate exceeds a predetermined value (point A in Fig. 8), the ability of the EGR cooler 82 to cool exhaust gas reaches its limit, and the temperature of exhaust gas that recirculates in the intake system 6 increases. Therefore, when the EGR rate exceeds such a predetermined value, the increase of the compression end temperature due to the ability of the EGR cooler 82 to cool exhaust gas reaching its limit surpasses the decrease of the compression end temperature due to the decrease of charging efficiency, and from the time the predetermined EGR rate is exceeded onward, the compression end temperature is on an upward trend as the EGR rate is increased (see the change in compression end temperature indicated by the narrow line in Fig. 8).

However, as the EGR rate is increased, there is a timing at which the air-fuel mixture self-ignition temperature becomes higher than the compression end temperature (point B in Fig. 8). That is, insufficient cylinder preheating emerges from this time onward, and the successive combustion in which fuel injected in main injection starts burning immediately after injection cannot be achieved.

Therefore, in the present embodiment, in order to prevent such insufficient cylinder preheating, cylinder temperature increase control such as setting the pre-injection timing to be shifted toward the angle of advance side is initiated at a stage before the timing at which the air-fuel mixture self-ignition temperature becomes higher than the compression end temperature (a stage where the EGR rate is low: point C in Fig. 8), and the compression end temperature is set to the value indicated by the dashed single-dotted line in Fig. 8, so that the compression end temperature is always higher than the air-fuel mixture self-ignition temperature even when the EGR rate becomes high. Thus, the higher the EGR rate, the farther the pre-injection injection timing is shifted toward the angle of advance side, so that a large amount of preheat is obtained by this pre-injection. The length of each arrow shown in Fig. 8 corresponds to the amount of preheat obtained as a result of shifting the pre-injection injection timing toward the angle of advance side at respective EGR rates. Note that how much the injection timing is advanced in pre-injection according to the EGR rate is determined through simulation or the like, and is stored in the ROM 102 in advance.

In this manner, the pre-injection injection timing is shifted toward the angle of advance side according to the EGR rate, and it is thus possible to achieve successive combustion of fuel injected in main injection. Also, avoiding ignition delay in main injection can reduce combustion noise and can enhance engine quietness. Moreover, NOx emissions and PM emissions can be reduced and combustion efficiency can be enhanced.

Note that a case where a timing (point B in Fig. 8) at which the air-fuel mixture self-ignition temperature becomes higher than the compression end temperature is present on the high EGR rate side relative to the point (point A in Fig. 8) at which the downward trend of the compression end temperature turns into an upward trend as the EGR rate is increased was described in reference to Fig. 8. By executing the same control, it is possible to achieve successive combustion and enhance engine quietness not only in this case but also in a case where a timing (point B in Fig. 8) at which the air-fuel mixture self-ignition temperature becomes higher than the compression end temperature is present on the low EGR rate side relative to the point (point A in Fig. 8) at which the downward trend of the compression end temperature turns into an upward trend as the EGR rate is increased.

### (Second embodiment)

In the present embodiment, the pre-injection injection amount is changed according to the EGR rate. That is, the higher the EGR rate, the greater the corrective increase of the pre-injection injection amount.

Fig. 9 shows a change in heat generation rate and a fuel injection pattern in the case where the pre-injection injection amount is correctively increased as mentioned above. The dashed double-dotted line in the fuel injection pattern depicts the injection rate (corresponding to the injection amount) in conventional pre-injection.

As shown in Fig. 9, a corrective increase of the pre-injection injection amount enhances the amount of heat generated (heat generation rate) per unit time after the execution of pre-injection. In other words, fuel injected in pre-injection burns and a cylinder is sufficiently preheated in a relatively short period of time.

Also, a corrective increase of the pre-injection injection amount enhances the kinetic energy of the fuel injected in this pre-injection (enhances penetration). Therefore, the distance the fuel droplets travel is far and the fuel is injected over a large space within a cylinder, ensuring that the air-fuel ratio over a large area is close to the theoretical air-fuel ratio. The combustion of the fuel injected in this pre-injection is thus improved, and the cylinder can also be sufficiently preheated by this. Note that how much corrective increase is executed in pre-injection according to the EGR rate is determined through simulation or the like, and such data is stored in the ROM 102 in advance.

In this manner, main injection is started after the inside of a cylinder is sufficiently preheated by the combustion of fuel injected in pre-injection. As a result, insufficiency of the amount of preheat at the main injection start timing is prevented, and the above-described successive combustion can be achieved in which combustion immediately starts after fuel injection with almost no ignition delay once the fuel injected in main injection undergoes thermal decomposition by being immediately exposed to a cylinder temperature environment that has a temperature no less than the self-ignition temperature.

Note that, in the present embodiment, due to the corrective increase of the pre-injection injection amount, unburned fuel that does not start burning before the beginning of fuel injection in main injection is present. This unburned fuel starts burning after the beginning of main injection and therefore the majority of such fuel is converted into engine torque. For this reason, the main-injection injection amount is correctively decreased such that the engine does not generate more torque than is necessary. The dashed line in the fuel injection pattern presented in Fig. 9 shows the fuel injection pattern in main injection before a corrective decrease, and the solid line shows the fuel injection pattern in main injection after a corrective decrease. Thereby, appropriate engine torque can be obtained (the aforementioned required torque can be obtained).

For example, assuming that the amount of heat generated when 1.5 mm³ of fuel is completely burned is required in pre-injection to achieve the successive combustion, in the present embodiment the pre-injection amount is set to, for example, 5.0 mm³, and 1.5 mm³ of the fuel is burned to secure the required amount of heat (the amount of heat that contributes to preheating). In this case, 3.5 mm³ of the fuel starts burning after the beginning of main injection and serves to increase engine torque, and the main-injection injection amount is thus correctively reduced in advance by an amount corresponding to the aforementioned amount (3.5 mm³).

Fig. 10 shows results of analyzing the relationship between a pre-injection execution timing and the amount of heat generated in a cylinder at the pre-injection execution timing with respect to a plurality of fuel injection amounts(AtoF). For example, A refers to a fuel injection amount of 1.5 mm³, B refers to a fuel injection amount of 2.0 mm³, C refers to a fuel injection amount of 3.0 mm³, D refers to a fuel injection amount of 4.0 mm³, E refers to a fuel injection amount of 5.0 mm³, and F refers to a fuel injection amount of 6.0 mm³.

In the present embodiment, in executing pre-injection at the timing when the piston 13 is 15° before the compression top dead center (BTDC) for example, the amount of fuel injected in pre-injection is set to 2.0 mm³ if the EGR rate is 15% so that the amount of heat corresponding to B1 in the figure is obtained, the amount of fuel injected in pre-injection is set to 3.0 mm³ if the EGR rate is 20% so that the amount of heat corresponding to C1 in the figure is obtained, and the amount of fuel injected in pre-injection is set to 4.0 mm³ if the EGR rate is 30% so that the amount of heat corresponding to D1 in the figure is obtained. In this way, the amount of fuel injected in pre-injection is increased as the EGR rate is increased.

Note that, as can be understood from Fig. 10, the closer the pre-injection injection timing approaches the compression top dead center (TDC) of the piston 13, the greater the amount of heat generated even if the amount of fuel injected is the same. For this reason, the closer the pre-injection injection timing approaches the TDC, the further the fuel injection amount in this pre-injection is correctively decreased so that a minimum necessary preheating amount is obtained.

In the present embodiment also, heat for preheating the inside of a cylinder can be obtained in an amount according to the EGR rate as in the first embodiment described above, thereby making it possible to achieve successive combustion of fuel injected in main injection. Also, avoiding ignition delay in main injection can reduce combustion noise and can enhance engine quietness.

### (Third embodiment)

In the present embodiment, whether the above-described pilot injection is executed or not is determined according to the EGR rate. In other words, when the EGR rate is high (for example, when the EGR rate exceeds 20%), pilot injection is executed prior to the above-described pre-injection, and the preheating effect is enhanced by increasing the amount of fuel injected prior to main injection.

Fig. 11 shows a change in heat generation rate and a fuel injection pattern in the case where pilot injection is executed prior to pre-injection as stated above.

As shown in Fig. 11, an increase of the amount of fuel injected prior to main injection due to the execution of pilot injection extends the time from the execution of pilot injection to the execution of main injection. In other words, the time for sufficiently preheating the inside of a cylinder by the combustion of fuel injected in pilot injection is secured as a long period of time. Also, an increase of the amount of fuel injected prior to main injection (injection amount in pilot injection and pre-injection) enhances the amount of heat generated (heat generation rate) per unit time after the execution of pre-injection. In other words, fuel injected in pilot injection and pre-injection burns and the inside of a cylinder is sufficiently preheated in a relatively short period of time. Thus, main injection is started after the inside of a cylinder is sufficiently preheated by the combustion of pilot injection and fuel injected in pre-injection. As a result, insufficiency of the amount of preheat at the main injection start timing is prevented, and the above-described successive combustion can be achieved in which combustion immediately starts after fuel injection with almost no ignition delay once the fuel injected in main injection undergoes thermal decomposition by being immediately exposed to a cylinder temperature environment that has a temperature no less than the self-ignition temperature.

Note that, in the present embodiment also, unburned fuel that does not start burning before the beginning of fuel injection in main injection is present. This unburned fuel starts burning after the beginning of main injection and therefore the majority of such fuel is converted into engine torque. For this reason, the main-injection injection amount is correctively decreased such that the engine does not generate more torque than is necessary. The dashed line in the fuel injection pattern presented in Fig. 11 shows the fuel injection pattern in main injection before a corrective decrease, and the solid line shows the fuel injection pattern in main injection after a corrective decrease. Note that the EGR rate at which this pilot injection is initiated and the extent of corrective decrease in main injection are determined through simulation or the like, and such data are stored in the ROM 102 in advance.

In the present embodiment also, as in the embodiments described above, successive combustion of fuel injected in main injection can be achieved. Also, avoiding ignition delay in main injection can reduce combustion noise and can enhance engine quietness.

### (Fourth embodiment)

In the present embodiment, the inside of a cylinder is preheated using the glow plug 19. When the EGR rate exceeds a predetermined value, electricity is applied to the glow plug 19 to preheat the inside of a cylinder. For example, when the EGR rate exceeds 20%, electricity is applied to the glow plug 19 to preheat the inside of a cylinder prior to the beginning of main injection, thereby making it possible to achieve successive combustion of fuel injected in main injection. Note that the EGR rate at which this application of electricity to the glow plug 19 is started is determined through simulation or the like, and such data is stored in the ROM 102 in advance.

Also, the amount of heat for preheating may be varied according to the EGR rate through changing the voltage applied (or current supplied) to the glow plug 19 according to the EGR rate. In other words, the higher the EGR rate, the greater the voltage applied (or current supplied) to the glow plug 19 is set so that the preheating effect is enhanced.

Also, preheating the inside of a cylinder using the glow plug 19 as described above may be performed only during the warm-up of the engine 1, and any of the cylinder temperature increase control described in the first to third embodiments above may be performed upon completion of the warm-up of the engine 1. In other words, it is possible that stable combustion characteristics are not sufficiently attained and the amount of preheat is not sufficient during the warm-up of the engine 1, and in such a situation the amount of preheat is reliably secured not by using the fuel combustion heat but by electrically obtained heat energy.

### (Fifth embodiment)

In the present embodiment, the amount of heat for preheating the inside of a cylinder is controlled using the EGR cooler bypass path 83 that bypasses the EGR cooler 82. Specifically, adjustment of the opening degree of the EGR cooler bypass valve 84 provided in the EGR cooler bypass path 83 regulates the amount of exhaust gas flowing back to the intake system 6 that passes through the EGR cooler 82, and thereby the temperature of exhaust gas that flows back to the intake system 6 is controlled, and the amount of heat for preheating the inside of a cylinder is thus controlled.

Specifically, the higher the EGR rate, the greater the opening degree of the EGR cooler bypass valve 84 is set so as to reduce the amount of exhaust gas that passes through the EGR cooler 82 to recirculate exhaust gas of a relatively high temperature in the intake system 6, thereby enhancing the preheating effect. Note that the opening degree of the EGR cooler bypass valve 84 according to the EGR rate is determined through simulation or the like, and such data is stored in the ROM 102 in advance.

### (Sixth embodiment)

The present embodiment is directed to a technique for use when pre-injection ignition delay has occurred due to the endothermic reaction of fuel injected in pre-injection after the pre-injection injection amount is correctively increased as the EGR rate becomes high as in the second embodiment described above.

In other words, in the present embodiment, the pre-injection injection timing is shifted toward the angle of advance side in a situation where pre-injection ignition delay occurs as the pre-injection injection amount is correctively increased in relation to an increased EGR rate.

For example, assuming that the amount of heat generated when 2.0 mm³ of fuel is completely burned is required in pre-injection to achieve the successive combustion, in the present embodiment the pre-injection amount is set to, for example, 5.0 mm³ and the pre-injection injection timing is shifted toward the angle of advance side (for example, only 10° toward the angle of advance side in terms of the crank angle). Thereby, 2.0 mm³ of the fuel injected in pre-injection can be burned by the beginning of main injection, and it is thus possible to secure the required amount of heat (the amount of heat that contributes to preheating). In this case, 3.0 mm³ of the fuel starts burning after the beginning of main injection and serves to increase engine torque, and as in the second embodiment described above the main-injection injection amount is thus correctively reduced in advance by an amount corresponding to the aforementioned amount (3.0 mm³). The relationship between how much the injection amount is correctively increased and how much the injection timing is advanced in the pre-injection is determined through simulation or the like, and such data is stored in the ROM 102 in advance.

As described above, in the present embodiment, shifting the pre-injection injection timing toward the angle of advance side extends the time from the execution of pre-injection to the execution of main injection. In other words, the time for sufficiently preheating the inside of a cylinder by the combustion of fuel injected in pre-injection is secured as a long period of time. Thus, main injection is started after the inside of a cylinder is sufficiently preheated by the combustion of fuel injected in pre-injection. As a result, while preventing the problems that may result from the corrective increase of the pre-injection injection amount, insufficiency of the amount of preheat at the main injection start timing is prevented, and the above-described successive combustion can be achieved in which combustion immediately starts after fuel injection with almost no ignition delay once the fuel injected in main injection undergoes thermal decomposition by being immediately exposed to a cylinder temperature environment that has a temperature no less than the self-ignition temperature (for example, 850 K).

### (Operation for determining ignition delay amount)

It is effective to execute the cylinder temperature increase control described in each of the embodiments above only while the ignition of fuel injected in main injection is delayed. Since such ignition delay occurs when the temperature within a cylinder is lower than the air-fuel mixture self-igniting temperature, whether ignition delay has occurred or not can be determined by directly measuring the temperature within the cylinder or the pressure in the cylinder. However, such measurement is often difficult.

Therefore, whether ignition delay has occurred or not is determined according to the output signal of the vibration sensor 4A. Specifically, vibrations of the cylinder block 11 that occur in conjunction with the combustion of an air-fuel mixture in the combustion chamber 3 are detected by the vibration sensor 4A. Then, the vibration waveform thus obtained is analyzed for determining whether such ignition delay has occurred or not.

Fig. 12(a) shows a vibration waveform when no ignition delay occurs with fuel injected in main injection. Fig. 12(b) shows a vibration waveform when ignition delay occurs with fuel injected in main injection. Regarding these waveforms, the horizontal axis represents the crank angle and the vertical axis represents the vibration amplitude. As can be understood, the vibration frequencies and how often vibrations are generated when ignition delay occurs are different from those when no ignition delay occurs. In other words, when no ignition delay occurs, vibrations resulting from combustion are generated from the time of the piston 13 reaching the TDC, and their mode of vibration includes relatively low frequency and small amplitude. On the other hand, when ignition delay occurs, vibrations resulting from combustion are generated from the time when the piston 13 is past the TDC position and their mode of vibration includes relatively large frequency and large amplitude. Fig. 12(c) shows a waveform depicting how often these types of vibrations are generated at different frequency bands. As can be understood, whether the ignition delay of fuel injected in main injection has occurred can be determined by finding how often vibrations are generated at different frequency bands.

Then, when no ignition delay occurs, the cylinder temperature increase control is not executed, and when ignition delay occurs, the cylinder temperature increase control is executed. This allows a shortage of the actual air-fuel mixture temperature relative to the air-fuel mixture self-ignition temperature to be determined without needing to detect the temperature within a cylinder or the pressure within a cylinder, and thus the configuration for this determination can be simple, enhancing the practical applicability of the present invention.

### - Other embodiments -

In the embodiments described above, a case was described in which the present invention is applied to an in-line four-cylinder diesel engine mounted in an automobile. The present invention is not limited to use in an automobile, and is applicable also to engines used in other applications. Also, there is no particular limitation with respect to the number of cylinders or the engine type (classified as an in-line engine, V-type engine, and so forth).

Also, in the embodiments described above, the maniverter 77 is provided with the NSR catalyst 75 and the DPNR catalyst 76, but a maniverter provided with the NSR catalyst 75 and a diesel particulate filter (DPF) may be used as well.

Also, the embodiments described above can be used in combination with each other, and the use of the embodiments in combination thereby can further enhance the preheating effect. Also, in the case where the first embodiment and the second embodiment described above are used in combination, when a shortage of the actual air-fuel mixture temperature relative to the air-fuel mixture self-ignition temperature is relatively small, the cylinder temperature increase control according to the first embodiment may be executed, and when a shortage of the actual air-fuel mixture temperature relative to the air-fuel mixture self-ignition temperature is relatively large, the cylinder temperature increase control according to the second embodiment may be executed.

Furthermore, the cylinder temperature increase control according to the present invention can be employed in an engine 1 that is equipped with a variable valve timing (VVT) mechanism even after the intake air charging efficiency is changed due to the function of the VVT mechanism.

The present invention can be employed in a common rail in-cylinder direct injection multi-cylinder diesel engine mounted in an automobile to control the engine when the EGR rate is set relatively high.

## Claims

1. A control apparatus of a compression self-igniting internal combustion engine in which an exhaust recirculating apparatus that recirculates part of exhaust gas discharged by an exhaust system in an intake system is provided, at least main injection and sub injection performed prior to the main injection can be performed as a fuel injection operation from a fuel injection valve, and combustion of fuel injected in the main injection is primarily diffusive combustion, the control apparatus comprising:
cylinder temperature controlling means that executes, when a recirculation rate of exhaust gas in the intake system exceeds a predetermined value at which an actual air-fuel mixture temperature is lower than an air-fuel mixture self-ignition temperature, cylinder temperature increase control for increasing an air-fuel mixture temperature so as to fill a shortage of the actual air-fuel mixture temperature relative to the air-fuel mixture self-ignition temperature based on the recirculation rate.

2. The control apparatus of an internal combustion engine according to claim 1, wherein:
the cylinder temperature controlling means executes cylinder temperature increase control so as to correct an injection timing of the sub injection to be shifted toward the angle of advance side such that the greater the shortage of the actual air-fuel mixture temperature relative to the air-fuel mixture self-ignition temperature, the farther the injection timing of the sub injection is shifted toward the angle of advance side.

3. The control apparatus of an internal combustion engine according to claim 1 or 2, wherein:
the cylinder temperature controlling means executes cylinder temperature increase control so as to correct an injection amount of the sub injection to be increased such that the greater the shortage of the actual air-fuel mixture temperature relative to the air-fuel mixture self-ignition temperature, the greater the injection amount of the sub injection is increased.

4. The control apparatus of an internal combustion engine according to claim 1 or 2, wherein:
the cylinder temperature controlling means executes cylinder temperature increase control so as to correct an injection amount of the sub injection to be increased and an injection timing of the sub injection to be shifted toward the angle of advance side such that the greater the shortage of the actual air-fuel mixture temperature relative to the air-fuel mixture self-ignition temperature, the greater the injection amount of the sub injection is increased and the farther the injection timing of the sub injection is shifted toward the angle of advance side.

5. The control apparatus of an internal combustion engine according to claim 1, wherein:
the cylinder temperature controlling means executes cylinder temperature increase control so as to apply electricity to a glow plug disposed in a cylinder such that electricity is applied to the glow plug if there is a shortage of the actual air-fuel mixture temperature relative to the air-fuel mixture self-ignition temperature.

6. The control apparatus of an internal combustion engine according to claim 1, wherein:
the cylinder temperature controlling means controls the extent of cooling of exhaust gas performed by an EGR cooler disposed in the exhaust recirculating apparatus such that the greater the shortage of the actual air-fuel mixture temperature relative to the air-fuel mixture self-ignition temperature, the smaller the extent of cooling of exhaust gas performed by the EGR cooler is set.

7. The control apparatus of an internal combustion engine according to claim 6, wherein:
a bypass path that bypasses the EGR cooler is provided, the bypass path is equipped with a regulating valve whose opening degree is adjustable, and the extent of cooling of exhaust gas performed by the EGR cooler is changed by an adjustment of the opening degree of the regulating valve so as to adjust the amount of exhaust gas that flows through the EGR cooler.

8. The control apparatus of an internal combustion engine according to any one of claims 1 to 7, wherein:
the cylinder temperature controlling means does not execute cylinder temperature increase control when the recirculation rate of exhaust gas in the intake system is at or lower than the predetermined value.

9. The control apparatus of an internal combustion engine according to any one of claims 1 to 8, wherein:
the internal combustion engine is equipped with a variable geometry turbocharger that has a turbine on which exhaust air is blown and a nozzle vane that changes the flow rate of the exhaust air blown on the turbine by its opening degree being changed, and the cylinder temperature controlling means executes the cylinder temperature increase control such that the lower the intake air charging efficiency set through a nozzle vane opening degree adjustment of the variable geometry turbocharger, the greater the amount of increase in air-fuel mixture temperature.

10. The control apparatus of an internal combustion engine according to any one of claims 1 to 9, wherein:
ignition delay amount determining means that determines the ignition delay amount in combustion of fuel injected in the main injection according to a state of vibration generation in the internal combustion engine in the combustion is provided, and the cylinder temperature controlling means executes the cylinder temperature increase control such that the greater the ignition delay amount determined by the ignition delay amount determining means, the greater the amount of increase in air-fuel mixture temperature.
